# EUROPÄISCHE PATENTSCHRIFT

(11) **EP 4 370 822 B1**
(45) Veröffentlichungstag und Bekanntmachung des Hinweises auf die Patenterteilung: **28.05.2025**
(21) Anmeldenummer: 22736246.4
(22) Anmeldetag: 23.06.2022
(51) Int. Cl.: F17C 13/04

(54) **SPERRVENTIL UND STEUERUNGSVERFAHREN ZUM STEUERN EINES WASSERSTOFFFLUSSES AUS EINEM DRUCKTANK**
SHUT-OFF VALVE AND CONTROL METHOD FOR CONTROLLING A HYDROGEN FLOW FROM A PRESSURIZED TANK
VANNE D'ARRÊT ET PROCÉDÉ DE COMMANDE POUR COMMANDER UN ÉCOULEMENT D'HYDROGÈNE À PARTIR D'UN RÉSERVOIR SOUS PRESSION

(30) Priorität: 12.07.2021 DE 102021207320
(43) Veröffentlichungstag der Anmeldung: 22.05.2024
(73) Patentinhaber: Robert Bosch GmbH, 70442 Stuttgart (DE)
(72) Erfinder: SCHAICH, Udo, 70378 Stuttgart (DE); RAU, Andreas, 70469 Stuttgart (DE); SOUBARI, Joachim, 76275 Ettlingen (DE)
(86) Internationale Anmeldenummer: PCT/EP2022/067232
(87) Internationale Veröffentlichungsnummer: WO 2023/285104

(56) Entgegenhaltungen:
- US-A1- 2017 248 274
- US-A1- 2018 038 507

## Beschreibung

### Stand der Technik

Wasserstoff wird häufig als Kraftstoff zum Betreiben von Brennstoffzellen aber auch von Verbrennungskraftmaschinen eingesetzt. Da Wasserstoff stark explosionsfähig ist, muss dieser sicher in einem Drucktank gelagert werden. Zum Kontrollieren eines Wasserstoffflusses aus einem Drucktank werden Sperrventile eingesetzt. Ein Sperrventil nach dem Stand der Technik ist im Dokument US2018/038507 A gezeigt.

### Offenbarung der Erfindung

Im Rahmen der vorgestellten Erfindung werden ein Sperrventil, ein Steuerungsverfahren, ein Drucktank und ein Fahrzeug mit den Merkmalen der jeweiligen unabhängigen Patentansprüche vorgestellt. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Sperrventil beschrieben sind, selbstverständlich auch im Zusammenhang mit dem erfindungsgemäßen Steuerungsverfahren bzw. dem erfindungsgemäßen Drucktank und dem erfindungsgemäßen Fahrzeug, und jeweils umgekehrt, sodass bezüglich der Offenbarung zu den einzelnen Erfindungsaspekten stets wechselseitig Bezug genommen wird bzw. werden kann.

Die vorgestellte Erfindung dient insbesondere dazu, eine robuste und verlässliche Kontrolle eines Wasserstoffflusses aus einem Drucktank zu ermöglichen.

Es wird somit in einem ersten Aspekt der vorgestellten Erfindung ein Sperrventil zum Kontrollieren eines Wasserstoffflusses von einem Druckgasbehälter in einen systemseitigen Raum vorgestellt. Das Sperrventil umfasst ein Hauptventil, wie bspw. eine Düsennadel, ein Servoventil, eine Spule und eine Zugfeder.

Die Spule ist dazu konfiguriert, bei einer Bestromung der Spule mit elektrischem Strom, das Servoventil von einer ersten Servoventilstellung in eine zweite Servoventilstellung zu bewegen.

Das Servoventil verschließt in der ersten Servoventilstellung einen Steuerungskanal in dem Hauptventil zwischen einem Steuerraum des Sperrventils und dem systemseitigen Raum gasdicht.

Das Servoventil gibt in der zweiten Servoventilstellung den Steuerungskanal in dem Hauptventil frei und ist in einen Steuerraum über dem Servoventil eingefahren.

Die Zugfeder koppelt das Servoventil mit dem Hauptventil mechanisch und stellt eine Zugkraft an dem Hauptventil bereit, um das Hauptventil von einer ersten Hauptventilstellung in eine zweite Hauptventilstellung zu bewegen, wenn sich das Servoventil in die zweite Servoventilstellung bewegt.

Das Hauptventil verschließt in der ersten Hauptventilstellung einen Hauptkanal, der den Druckgasbehälter mit dem systemseitigen Raum verbindet, gasdicht und gibt in der zweiten Hauptventilstellung den Hauptkanal frei.

Unter einem Sperrventil ist im Kontext der vorgestellten Erfindung ein Absperrventil zum Absperren und Freigeben eines fluidisch leitenden Pfades zu verstehen.

Unter einer Zugfeder ist im Kontext der vorgestellten Erfindung ein Federelement, wie bspw. eine mechanische Feder oder ein elastisches Element zu verstehen, das im ausgelenkten Zustand eine Zugkraft bereitstellt, um sich in eine unausgelenkte Stellung bzw. eine Ruhestellung zu bewegen.

Unter einem Druckgasbehälter ist im Kontext der vorgestellten Erfindung ein Raum zu verstehen, in dem Wasserstoff mit Hochdruck, insbesondere mit einem Druck bis 1100 bar, gelagert wird.

Unter einem systemseitigen Raum ist im Kontext der vorgestellten Erfindung ein Raum zu verstehen, der abströmseitig vom Sperrventil angeordnet ist und üblicherweise Drücke zwischen Atmosphärendruck und Speicherdruck im Druckgasbehälter annehmen kann.

Die vorgestellte Erfindung basiert auf zwei beweglichen Ventilen, nämlich einem Servoventil, das einen Wasserstofffluss bzw. Gasfluss und, dadurch bedingt, einen Druckverlauf in dem Sperrventil einstellt, und einem Hauptventil, das einen Wasserstofffluss aus dem Sperrventil bzw. durch das Sperrventil einstellt.

Erfindungsgemäß wirken das Servoventil und das Hauptventil zusammen, um eine robuste und verlässliche Bewegung des Hauptventils zwischen einer ersten Hauptventilstellung, bspw. einer Sperrstellung und einer zweiten Hauptventilstellung, bspw. einer Freigabestellung, zu ermöglichen.

Das vorgestellte Sperrventil verbindet über einen Hauptkanal einen Druckgasbehälter, in der Regel einen Drucktank, mit einem systemseitigen Raum, welcher üblicherweise über eine fluidisch leitende Verbindung bspw. ein Brennstoffzellensystem oder eine Verbrennungskraftmaschine mit Brennstoff, insbesondere z.B. Wasserstoff versorgen kann. Zur Anpassung eines Druckniveaus z.B. im Brennstoffzellensystem oder einer Verbrennungskraftmaschine werden diese üblicherweise mittelbar über Druckminderer mit dem systemseitigen Raum verbunden. In dem Hauptkanal ist das Hauptventil des Sperrventils beweglich angeordnet, sodass das Hauptventil ein Strömen von Wasserstoff bzw. Gas aus dem Druckgasbehälter in den systemseitigen Raum verhindert bzw. sperrt, wenn sich das Hauptventil in der ersten Hauptventilstellung befindet und bspw. in den Hauptkanal hinein ragt bzw. den Hauptkanal gasdicht verschließt. In der zweiten Hauptventilstellung gibt das Hauptventil eine Strömung von Wasserstoff aus dem Druckgasbehälter in den systemseitigen Raum frei, was bspw. über eine beabstandete Position zum Hauptkanal erfolgt.

Um ein Bewegen des Hauptventils von der ersten Hauptventilstellung in die zweite Hauptventilstellung zu ermöglichen, kombiniert das vorgestellte Sperrventil eine pneumatische Druckkraft, die durch eine Druckdifferenz innerhalb des Sperrventils erzeugt wird, mit einer mechanischen Kraft, die durch die erfindungsgemäß vorgesehene Zugfeder bereitgestellt wird.

Die pneumatische Druckkraft wird in dem vorgestellten Sperrventil durch ein Steuerraumprinzip bereitgestellt. Dies bedeutet, dass ein Steuerraum verwendet wird, um einen Gegendruck, der einem Hochdruck, der aus dem Druckgasbehälter auf das Hauptventil wirkt, entgegensteht, zu regulieren. Entsprechend wirkt keine bewegende Kraft auf das Hauptventil, wenn in dem Steuerraum der gleiche Hochdruck anliegt, wie er aus dem Druckgasbehälter auf das Hauptventil wirkt. Dies bedeutet, dass eine bewegende Kraft auf das Hauptventil wirkt, wenn in dem Steuerraum ein Druck anliegt, der niedriger ist als der aus dem Druckgasbehälter auf das Hauptventil wirkende Hochdruck, sodass der Hochdruck aufgrund einer Druckdifferenz zwischen dem Druckgasbehälter und dem Steuerraum das Hauptventil bewegt bzw. eine Druckkraft auf das Hauptventil einwirkt.

Um eine Druckdifferenz zwischen dem Druckgasbehälter und dem Steuerraum zu steuern, umfasst das vorgestellte Sperrventil ein Servoventil. Das Servoventil ist zwischen einer ersten Servoventilstellung, in der das Servoventil einen Steuerungskanal in dem Hauptkanal gasdicht verschließt und einer zweiten Servoventilstellung, in der das Servoventil den Steuerungskanal freigibt, bewegbar.

In einer Grundstellung, in der das Sperrventil ein Ausströmen von Wasserstoff aus dem Druckgasbehälter verhindert, wirkt der in dem Druckgasbehälter anliegende Hochdruck auf das Servoventil und drückt das Servoventil in bzw. auf den Steuerungskanal, sodass der Steuerungskanal gasdicht verschlossen ist.

Zum Freigeben eines Ausströmens von Wasserstoff aus dem Druckgasbehälter wird die Spule des Sperrventils bestromt, d.h. mit Elektrizität versorgt, sodass sich eine magnetische Kraft aufbaut, die das Servoventil in die zweite Servoventilstellung zieht. Dabei wird das Servoventil aufgrund des anliegenden Hochdrucks zunächst nur leicht angehoben bzw. in eine Servoventilhilfsstellung bewegt, in der der Steuerungskanal mit Wasserstoff durchströmbar ist, sodass Wasserstoff aus dem Steuerraum in den systemseitigen Raum strömt und ein Druck in dem Steuerraum reduziert wird. Aufgrund des reduzierten Drucks kann die magnetische Kraft das Servoventil in die zweite Servoventilstellung ziehen.

Beim Bewegen des Servoventils in die zweite Servoventilstellung wird ein Aufnahmeraum unter dem Servoventil bzw. zwischen dem Servoventil und dem Hauptventil freigegeben, in den sich das Hauptventil bewegen kann, wenn sich ein Druck in dem Aufnahmeraum durch in den systemseitigen Raum über den Steuerungskanal abfließenden Wasserstoff minimiert.

Um eine Bewegung des Hauptventils von der ersten Hauptventilstellung in die zweite Hauptventilstellung bzw. in den Aufnahmeraum zu unterstützen bzw. bereits bei einer geringen Druckdifferenz und entsprechend schnell zu ermöglichen, stellt die erfindungsgemäß vorgesehene Zugfeder eine Zugkraft an dem Hauptventil bereit, wenn sich das Servoventil in die zweite Servoventilstellung bewegt. Entsprechend wirkt die Zugkraft zusammen bzw. additiv mit einer pneumatischen Druckkraft, die durch den Druckgasbehälter auf das Hauptventil wirkt.

Zum Schließen bzw. Absperren des Sperrventils wird die Bestromung der Spule unterbrochen, sodass eine von einer Druckfeder bereitgestellte Druckkraft das Servoventil in die erste Servoventilstellung drückt, das Servoventil den Steuerungskanal gasdicht verschließt und ein Hochdruck in dem Steuerraum aufgebaut wird, der das Servoventil auf das Hauptventil und das Hauptventil in den Hauptkanal bzw. in die erste Hauptventilstellung drückt.

Es kann vorgesehen sein, dass der Steuerraum über dem Servoventil angeordnet ist und das Servoventil einen Zusatzsteuerungskanal umfasst, der den Steuerraum mit dem Steuerungskanal in dem Hauptventil verbindet, sodass das Servoventil sich beim Bewegen in die zweite Servoventilstellung in den Steuerraum bewegt.

Mittels eines über dem Servoventil angeordneten Steuerraums kann ein auf das Servoventil wirkender Druck eingestellt und entsprechend eine Bewegung des Servoventils kontrolliert werden. Mittels eines Steuerraums, in dem ein gegenüber einem Druckgasbehälter reduzierter Druck eingestellt werden kann, ist es möglich, das Servoventil durch additiv wirkende Kräfte, nämlich eine durch die Spule bereitgestellte magnetische Kraft und eine durch eine Druckdifferenz bereitgestellte pneumatische Druckkraft, verlässlich und schnell zu bewegen. Dazu ermöglicht ein Zusatzsteuerungskanal ein Abströmen von Wasserstoff aus dem Steuerraum durch das Servoventil und durch den Steuerungskanal in den systemseitigen Raum.

Es kann weiterhin vorgesehen sein, dass das Sperrventil einen Aufnahmeraum zur Aufnahme des Hauptventils in der zweiten Hauptventilstellung umfasst, wobei der Aufnahmeraum zwischen dem Servoventil und dem Hauptventil angeordnet ist und den Zusatzsteuerungskanal mit dem Steuerungskanal fluidisch leitend verbindet.

In einer vorteilhaften Ausführung ist im Zusatzsteuerkanal eine Drosselstelle vorhanden, die dazu konfiguriert ist, die Öffnungsbewegung des Servoventils zu dämpfen bzw. zu verlangsamen und somit ein Prellen am Hubanschlag zu verhindern.

Es kann weiterhin vorgesehen sein, dass eine Bewegung des Servoventils in die zweite Servoventilstellung eine Freigabe des Aufnahmeraums zum Aufnehmen des Hauptventils in der zweiten Hauptventilstellung bewirkt.

Durch einen Aufnahmeraum zum Aufnehmen des Hauptventils in der zweiten Hauptventilstellung, der in der ersten Servoventilstellung von dem Servoventil blockiert wird, ist eine sukzessive Bewegung von zunächst des Servoventils von der ersten Servoventilstellung in die zweite Servoventilstellung und eine nachfolgende Bewegung des Hauptventils von der ersten Hauptventilstellung in die zweite Hauptventilstellung sichergestellt.

Es kann vorgesehen sein, dass das Hauptventil eine gehäuseseitige Hubbegrenzung aufweist, derart, dass der Hauptventilhub kleiner als der Servoventilhub ist und bei vollständig geöffnetem Servoventil (103) sowie vollständig geöffnetem Hauptventil der Servoventilsitz geöffnet bleibt und ein Druckausgleich zwischen Steuerungskanal, Aufnahmeraum, Zusatzsteuerungskanal und Steuerraum stattfinden kann.

Es kann vorgesehen sein, dass die pneumatische Trennung des Steuerraums vom Druckgasbehälter über Führungen zwischen Servoventil und Gehäuse bzw. Hauptventil und Servoventil erfolgt.

In einer weiteren vorteilhaften Ausführung kann die pneumatische Trennung alternativ auch durch übliche Dichtungselemente wie z.B. O-Ringe, Dichtlippen oder Membranen in bzw. an den Führungen erfolgen, was eine starke Druckabsenkung im Steuerraum und dadurch auch eine besonders große öffnende Kraftwirkung an Servoventil und Hauptventil ermöglicht. Um in diesem Fall beim Schließvorgang nach Abschalten der magnetischen Kraftwirkung trotzdem ein sicheres Schließen zu gewährleisten muss dann eine alternative pneumatisch drosselnde Verbindung zwischen Steuerraum und Druckgasbehälter vorhanden sein, diese kann aber im Gegensatz zu einer Führung fertigungstechnisch besonders einfach z.B. über eine radiale Drosselbohrung zwischen Zusatzsteuerbohrung und Hochdruckbereich auf Höhe der Zugfeder oder z.B. radial im Hauptventil zwischen Aufnahmeraum und Hochdruckbereich erfolgen, es kann aber auch eine Drosselbohrung im Gehäuse zwischen Hochdruckbereich und Steuerraum vorgesehen sein.

Es kann weiterhin vorgesehen sein, dass das Sperrventil eine Druckfeder umfasst, die dazu konfiguriert ist, das Servoventil in die erste Servoventilstellung und das Hauptventil in die erste Hauptventilstellung zu drücken, wenn die Spule stromfrei ist.

Eine Druckfeder ermöglicht eine sichere und zuverlässige Absperrung des Sperrventils auch im Fehlerfall einer elektrischen Versorgung des Sperrventils.

Es kann weiterhin vorgesehen sein, dass das Servoventil ein erstes Kopplungselement zum mechanischen Koppeln mit einem ersten Gegenkopplungselement der Zugfeder umfasst, und das Hauptventil ein zweites Kopplungselement zum mechanischen Koppeln mit einem zweiten Gegenkopplungselement der Zugfeder umfasst.

Mittels Kopplungselementen und Gegenkopplungselementen, wie bspw. Haken und Ösen, kann eine sichere Verbindung des Servoventils, der Zugfeder und des Hauptventils erreicht werden, sodass ein Kraftfluss von dem Servoventils zu dem Hauptventil sichergestellt ist, wenn sich das Servoventil von der ersten Servoventilstellung in die zweite Servoventilstellung bewegt.

In einem zweiten Aspekt betrifft die vorgestellte Erfindung ein Steuerungsverfahren zum Steuern eines Wasserstoffflusses aus einem Drucktank mittels eines Sperrventils, wobei das Sperrventil ein Hauptventil, ein Servoventil, eine Spule und eine Zugfeder umfasst. Das Steuerungsverfahren umfasst einen Öffnungsschritt zum Öffnen des Sperrventils, bei dem die Spule mit elektrischem Strom bestromt wird, um das Servoventil von einer ersten Servoventilstellung in eine zweite Servoventilstellung zu bewegen, sodass das Servoventil einen Steuerungskanal in dem Hauptventil zwischen einem Steuerraum des Sperrventils und einem systemseitigen Raum freigibt, und ein in dem Steuerraum befindlicher Wasserstoff in den systemseitigen Raum strömt, wobei die Zugfeder das Servoventil mit dem Hauptventil mechanisch koppelt und eine Zugkraft an dem Hauptventil bereitgestellt wird, die das Hauptventil von einer ersten Hauptventilstellung in eine zweite Hauptventilstellung bewegt und ein Hauptkanal, der einen Druckgasbehälter mit dem systemseitigen Raum verbindet freigegeben wird. Weiterhin umfasst das Steuerungsverfahren einen Absperrschritt zum Absperren des Sperrventils, bei dem die Spule stromfrei geschaltet wird, sodass eine Druckfeder das Servoventil von der zweiten Servoventilstellung in die erste Servoventilstellung bewegt, und das Servoventil den Steuerungskanal in dem Hauptventil gasdicht verschließt, und das Hauptventil den Hauptkanal gasdicht verschließt.

Das vorgestellte Steuerungsverfahren dient insbesondere zum Betrieb des vorgestellten Sperrventils.

In einem dritten Aspekt betrifft die vorgestellte Erfindung ein Drucktanksystem mit einer möglichen Ausgestaltung des vorgestellten Sperrventils.

In einem vierten Aspekt betrifft die vorgestellte Erfindung ein Fahrzeug mit einer möglichen Ausgestaltung des vorgestellten Drucktanksystems.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Es zeigen:
Figuren 1a bis 1f einen Ablauf einer möglichen Ausgestaltung des vorgestellten Steuerungsverfahrens mit einer möglichen Ausgestaltung des vorgestellten Sperrventils,
Figur 2 eine mögliche Ausgestaltung des vorgestellten Fahrzeugs mit einer möglichen Ausgestaltung des vorgestellten Drucktanksystems.

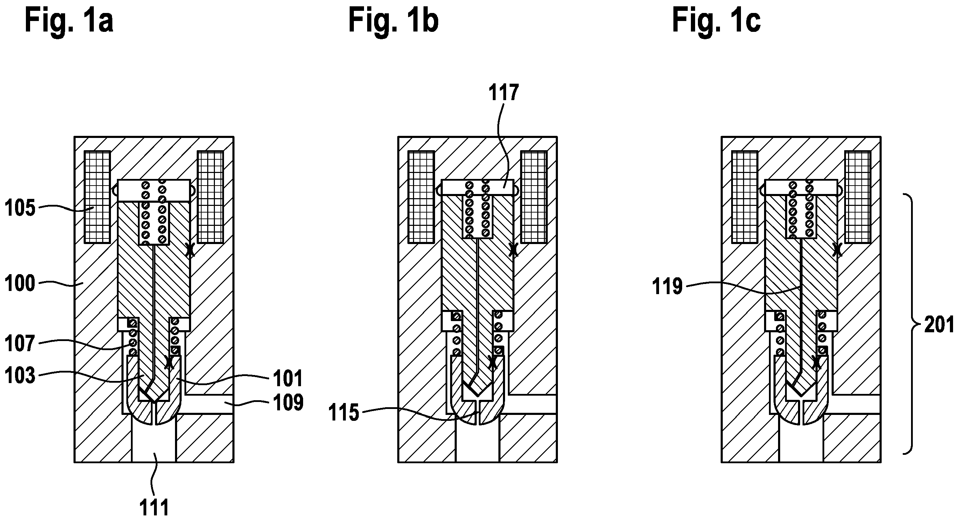

In Figur 1a ist ein Sperrventil 100 dargestellt. Das Sperrventil 100 umfasst ein Hauptventil 101, ein Servoventil 103, eine Spule 105 und eine Zugfeder 107.

In Figur 1a ist das Sperrventil 100 in einem Sperrzustand dargestellt, in dem ein Ausströmen von Wasserstoff aus einem Druckgasbehälter 109 in einen systemseitigen Raum 111 durch das Hauptventil 101 verhindert bzw. gesperrt wird.

In einem Öffnungsschritt 201 zum Öffnen des Sperrventils 100 wird die Spule 105 bestromt, sodass eine magnetische Kraft bereitgestellt wird, die das Servoventil 103 entgegen einer Federkraft einer Druckfeder 113 in eine ausgelenkte Stellung bzw. in eine Servoventilhilfsstellung bewegt, wie in Figur 1b dargestellt, in der ein Steuerungskanal 115 in dem Hauptventil 101 freigegeben wird.

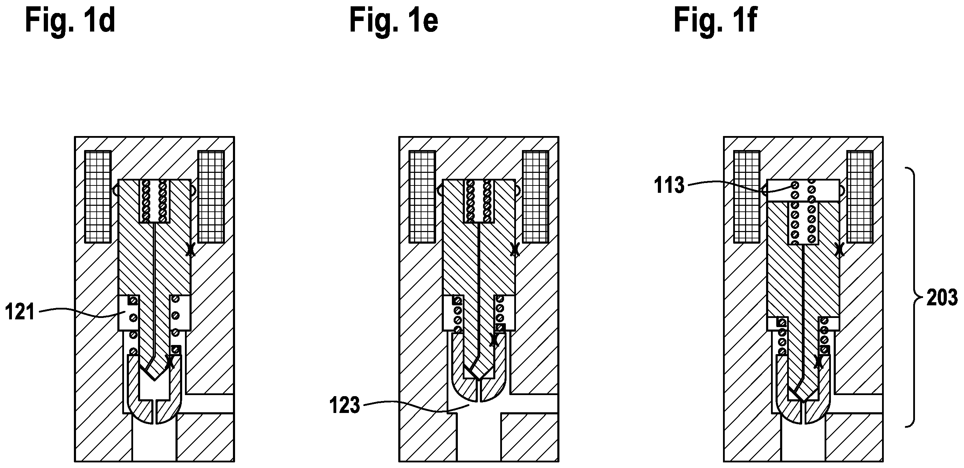

Durch die Freigabe des Steuerungskanals 115 strömt Wasserstoff bzw. Gas aus einem Steuerraum 117 über einen Zusatzsteuerungskanal 119 und den Steuerungskanal 115 in den systemseitigen Raum 111, wie in Figur 1c angedeutet. Dabei wirken der Steuerungskanal 115 und der Zusatzsteuerungskanal 119 jeweils als Drossel. Entsprechend senkt sich ein Druck in dem Steuerraum 117, sodass die durch die Spule 105 bereitgestellte magnetische Kraft das Servoventil 103 in die in Figur 1d dargestellte zweite Servoventilstellung bewegt.

Weiterhin kann vorgesehen sein, dass das Hauptventil 101 beispielsweise im Fall gleicher bzw. ähnlicher Druckniveaus im Hochdruckbereich 109 sowie im systemseitigen Bereich 111, also einem Betriebszustand, in dem durch das Steuerraumprinzip keine bzw. nur geringe unterstützende pneumatische Öffnungskräfte am Hauptventil vorhanden sind, auch über rein elektromagnetische Kräfte geöffnet werden kann, welche hierbei vom Servoventil über die Feder auf das Hauptventil übertragen werden.

Das Servoventil 103 ist über die Zugfeder 107 mit dem Hauptventil 101 mechanisch gekoppelt, sodass die Zugfeder 107 bei einer Bewegung des Servoventils 103 von der der ersten Servoventilstellung in die zweite Servoventilstellung ausgelenkt wird und eine durch die Zugfeder 107 bereitgestellte Zugkraft graduell auf das Hauptventil 101 übertragen wird, um das Hauptventil 101 von der in Figur 1c dargestellten ersten Hauptventilstellung in die in Figur 1d dargestellte zweite Hauptventilstellung zu bewegen.

In Figur 1d ist das Servoventil 103 In der zweiten Servoventilstellung dargestellt, in der das Servoventil 103 vollständig ausgelenkt in den Steuerraum 117 eingefahren ist. Entsprechend wirkt durch die Zugfeder 107 eine maximale Zugkraft auf das Hauptventil 101 zusammen mit einer aufgrund einer Druckdifferenz zwischen einem Aufnahmeraum 121 und dem Druckgasbehälter 109 an dem Hauptventil 101 anliegenden Druckkraft additiv zusammen, um das Hauptventil 101 in die zweite Hauptventilstellung zu bewegen, wie in Figur 1e dargestellt.

Sobald sich das Hauptventil 101 in der zweiten Hauptventilstellung befindet, ist ein Hauptkanal 123 zum Verbinden des Druckgasbehälters 109 mit dem systemseitigen Raum 111 freigegeben, sodass Wasserstoff bzw. Gas aus dem Druckgasbehälter 109 in den systemseitigen Raum 111 strömen kann.

Zum Absperren des Hauptkanals 123 in einem Absperrschritt 203 wird die Spule 105, wie in Figur 1f dargestellt, stromfrei geschaltet, sodass die Druckfeder 113 das Servoventil 103 von der zweiten Servoventilstellung eine Schließbewegung in Richtung des Hauptventils ausführt. Sobald das Servoventil das Hauptventil berührt, wird der Steuerungskanal 115 verschlossen und über den Servoventilsitz eine mechanische Kraft auf das Hauptventil ausgeübt. Zudem steigt der Druck im Steuerraum aufgrund der Befüllung über den Drosselspalt wieder an. Die Kombination aus Druckfeder 113, die über den Servoventilsitz mechanisch eine Schließkraft auf das Hauptventil ausübt und gleichzeitiger Befüllung des Steuerraums führt zu einer gemeinsamen Schließbewegung des Verbandes bestehend aus Servo- und Hauptventil

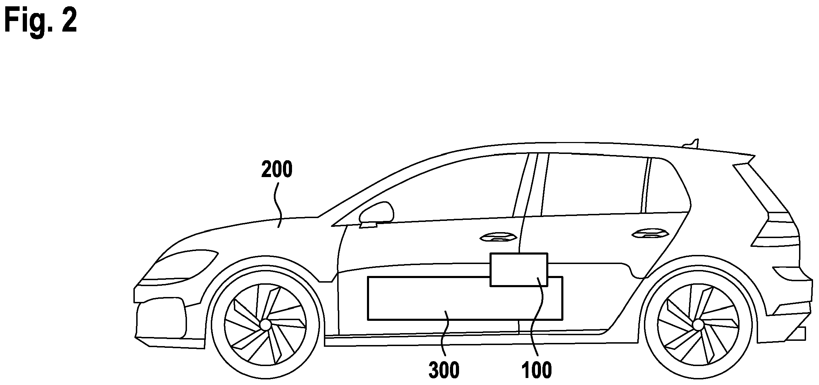

In Figur 2 ist ein Fahrzeug 200 dargestellt. Das Fahrzeug 200 umfasst ein Drucktanksystem mit einem Sperrventil 100 gemäß Figur 1.

## Patentansprüche

1. Sperrventil (100) zum Kontrollieren eines Druckgasflusses von einem Druckgasbehälter (109) in einen systemseitigen Raum (111), wobei das Sperrventil (100) umfasst:
- ein Hauptventil (101),
- ein Servoventil (103),
- eine Spule (105),
wobei die Spule (105) dazu konfiguriert ist, bei einer Bestromung der Spule (105) mit elektrischem Strom, das Servoventil (103) von einer ersten Servoventilstellung in eine zweite Servoventilstellung zu bewegen,
wobei das Servoventil (103) in der ersten Servoventilstellung einen Steuerungskanal (115) in dem Hauptventil (101) zwischen einem Steuerraum (117) des Sperrventils (100) und dem systemseitigen Raum (109) gasdicht verschließt, und
das Servoventil (103) in der zweiten Servoventilstellung den Steuerungskanal (115) in dem Hauptventil (101) freigibt und in den Steuerraum (117) über dem Servoventil (103) eingefahren ist, **gekennzeichnet durch** eine Zugfeder (107),
wobei die Zugfeder (107) das Servoventil (103) mit dem Hauptventil (101) mechanisch koppelt und eine Zugkraft an dem Hauptventil (101) bereitstellt, um das Hauptventil (101) von einer ersten Hauptventilstellung in eine zweite Hauptventilstellung zu bewegen, wenn sich das Servoventil (103) in die zweite Servoventilstellung bewegt,
wobei das Hauptventil (101) in der ersten Hauptventilstellung einen Hauptkanal (123), der den Druckgasbehälter (109) mit dem systemseitigen Raum (111) verbindet, gasdicht verschließt, und das Hauptventil (101) in der zweiten Hauptventilstellung den Hauptkanal (123) freigibt.

2. Sperrventil (100) nach Anspruch 1,
**dadurch gekennzeichnet,**
**dass** der Steuerraum (117) über dem Servoventil (103) angeordnet ist und das Servoventil (103) einen Zusatzsteuerungskanal (119) umfasst, der den Steuerraum (117) mit dem Steuerungskanal (115) in dem Hauptventil (101) verbindet, sodass das Servoventil (103) sich beim Bewegen in die zweite Servoventilstellung in den Steuerraum (117) bewegt.

3. Sperrventil (100) nach Anspruch 2,
**dadurch gekennzeichnet,**
**dass** das Sperrventil (100) einen Aufnahmeraum (121) zur Aufnahme des Hauptventils (101) in der zweiten Hauptventilstellung umfasst, wobei der Aufnahmeraum (121) zwischen dem Servoventil (103) und dem Hauptventil (101) angeordnet ist und den Zusatzsteuerungskanal (119) mit dem Steuerungskanal (115) fluidisch leitend verbindet

4. Sperrventil (100) nach einem der voranstehenden Ansprüche,
**dadurch gekennzeichnet,**
**dass** in dem Zusatzsteuerkanal (119) eine Drosselstelle vorhanden ist.

5. Sperrventil (100) nach Anspruch 3,
**dadurch gekennzeichnet,**
**dass** eine Bewegung des Servoventils (103) in die zweite Servoventilstellung eine Freigabe des Aufnahmeraums (121) zum Aufnehmen des Hauptventils (101) in der zweiten Hauptventilstellung bewirkt.

6. Sperrventil (100) nach einem der voranstehenden Ansprüche,
**dadurch gekennzeichnet,**
**dass** das Hauptventil (101) eine gehäuseseitige Hubbegrenzung aufweist, die bewirkt, dass ein Hauptventilhub kleiner als ein Servoventilhub ist und bei vollständig geöffnetem Servoventil (103) sowie vollständig geöffnetem Hauptventil (101) der Servoventilsitz geöffnet bleibt und ein Druckausgleich zwischen Steuerungskanal (115), Aufnahmeraum (121), Zusatzsteuerungskanal (119) und Steuerraum (117) stattfinden kann.

7. Sperrventil (100) nach einem der voranstehenden Ansprüche,
**dadurch gekennzeichnet,**
**dass** eine pneumatische Trennung des Steuerraums vom Druckgasbehälter über Führungen an Servoventil oder Hauptventil erfolgt.

8. Sperrventil (100) nach Anspruch 7,
**dadurch gekennzeichnet,**
**dass** eine pneumatische Trennung des Steuerraums vom Druckgasbehälter in den Führungsbereichen von Servoventil oder Hauptventil durch ein Dichtungselement wie z.B. O-Ring, Dichtlippe oder Membran erfolgt

9. Sperrventil (100) nach Anspruch 8,
**dadurch gekennzeichnet,**
**dass** eine pneumatisch drosselnde Verbindung zwischen Steuerraum und Druckgasbehälter vorhanden ist

10. Sperrventil (100) nach einem der voranstehenden Ansprüche,
**dadurch gekennzeichnet,**
**dass** das Sperrventil (100) eine Druckfeder (13) umfasst, die dazu konfiguriert ist, das Servoventil (103) in die erste Servoventilstellung und das Hauptventil (101) in die erste Hauptventilstellung zu drücken, wenn die Spule (105) stromfrei ist.

11. Sperrventil (100) nach einem der voranstehenden Ansprüche,
**dadurch gekennzeichnet,**
**dass** das Servoventil (103) ein erstes Kopplungselement zum mechanischen Koppeln mit einem ersten Gegenkopplungselement der Zugfeder (107) umfasst, und
das Hauptventil (101) ein zweites Kopplungselement zum mechanischen Koppeln mit einem zweiten Gegenkopplungselement der Zugfeder (107) umfasst.

12. Steuerungsverfahren zum Steuern eines Druckgasflusses aus einem Drucktank (300) mittels eines Sperrventils (100),
wobei das Sperrventil (100) umfasst:
- ein Hauptventil (101),
- ein Servoventil (103),
- eine Spule (105),
- eine Zugfeder (107),
wobei das Steuerungsverfahren umfasst:
- einen Öffnungsschritt (201) zum Öffnen des Sperrventils (100), bei dem die Spule (105) mit elektrischem Strom bestromt wird, um das Servoventil (103) von einer ersten Servoventilstellung in eine zweite Servoventilstellung zu bewegen, sodass das Servoventil (103) einen Steuerungskanal (115) in dem Hauptventil (101) zwischen einem Steuerraum (117) des Sperrventils (100) und einem systemseitigen Raum (111) freigibt, und ein in dem Steuerraum (117) befindliches Druckgas in den systemseitigen Raum (111) strömt,
wobei die Zugfeder (107) das Servoventil (103) mit dem Hauptventil (101) mechanisch koppelt und eine Zugkraft an dem Hauptventil (101) bereitgestellt wird, die das Hauptventil (101) von einer ersten Hauptventilstellung in eine zweite Hauptventilstellung bewegt und ein Hauptkanal (123), der einen Druckgasbehälter (109) mit dem systemseitigen Raum (111) verbindet, freigegeben wird,
- einen Absperrschritt (203) zum Absperren des Sperrventils (100), bei dem die Spule (105) stromfrei geschaltet wird, sodass eine Druckfeder (113) das Servoventil (103) von der zweiten Servoventilstellung in die erste Servoventilstellung bewegt, und das Servoventil (103) den Steuerungskanal (115) in dem Hauptventil (101 gasdicht verschließt, und das Hauptventil (101) den Hauptkanal (123) gasdicht verschließt.

13. Drucktanksystem (300) mit einem Sperrventil (100) nach einem der Ansprüche 1 bis 11.

14. Fahrzeug (200) mit einem Drucktanksystem (300) nach Anspruch 13.

## Claims

1. Shut-off valve (100) for controlling a flow of compressed gas from a compressed gas vessel (109) into a system-proximal chamber (111), wherein the shut-off valve (100) comprises:
- a main valve (101),
- a servo valve (103),
- a coil (105),
wherein the coil (105) is configured to move the servo valve (103) from a first servo valve position to a second servo valve position when the coil (105) is energized with electric current, wherein the servo valve (103) in the first servo valve position closes in a gas-tight manner a control duct (115) in the main valve (101) between a control chamber (117) of the shut-off valve (100) and the system-proximal chamber (109), and
the servo valve (103) in the second servo valve position releases the control duct (115) in the main valve (101) and is retracted into the control chamber (117) above the servo valve (103), **characterized by** a tension spring (107), wherein the tension spring (107) mechanically couples the servo valve (103) to the main valve (101) and provides a tensile force at the main valve (101) to move the main valve (101) from a first main valve position to a second main valve position when the servo valve (103) moves to the second servo valve position,
wherein main valve (101) in the first main valve position closes in a gas-tight manner a main duct (123) which connects the compressed gas vessel (109) to the system-proximal chamber (111), and the main valve (101) in the second main valve position releases the main duct (123).

2. Shut-off valve (100) according to Claim 1,
**characterized in that**
the control chamber (117) is disposed above the servo valve (103), and the servo valve (103) comprises an auxiliary control duct (119) which connects the control chamber (117) to the control duct (115) in the main valve (101) in such a way that the servo valve (103) moves into the control chamber (117) as it moves to the second servo valve position.

3. Shut-off valve (100) according to Claim 2,
**characterized in that**
the shut-off valve (100) comprises a receptacle chamber (121) for receiving the main valve (101) in the second main valve position, wherein the receptacle chamber (121) is disposed between the servo valve (103) and the main valve (101) and fluidically connects the auxiliary control duct (119) to the control duct (115).

4. Shut-off valve (100) according to one of the preceding claims,
**characterized in that**
there is a restrictor point in the auxiliary control duct (119).

5. Shut-off valve (100) according to Claim 3,
**characterized in that**
a movement of the servo valve (103) to the second servo valve position causes the receptacle chamber (121) to be released so as to receive the main valve (101) in the second main valve position.

6. Shut-off valve (100) according to one of the preceding claims,
**characterized in that**
the main valve (101) has a housing-proximal stroke delimitation which causes a main valve stroke to be smaller than a servo valve stroke and, with the servo valve (103) fully open and the main valve (101) fully open, the servo valve seat remains open and pressure equalization between the control duct (115), the receptacle chamber (121), the auxiliary control duct (119) and the control chamber (117) can take place.

7. Shut-off valve (100) according to one of the preceding claims,
**characterized in that**
a pneumatic separation of the control chamber and the compressed gas vessel is performed by way of guides on the servo valve or main valve.

8. Shut-off valve (100) according to Claim 7,
**characterized in that**
a pneumatic separation of the control chamber and the compressed gas vessel is performed in the guide regions of the servo valve or main valve by a sealing element such as an O-ring, sealing lip or membrane.

9. Shut-off valve (100) according to Claim 8,
**characterized in that**
there is a pneumatically restricting connection between the control chamber and the compressed gas vessel.

10. Shut-off valve (100) according to one of the preceding claims,
**characterized in that**
the shut-off valve (100) comprises a compression spring (13) configured to push the servo valve (103) to the first servo valve position and the main valve (101) to the first main valve position when the coil (105) is de-energized.

11. Shut-off valve (100) according to one of the preceding claims,
**characterized in that**
the servo valve (103) comprises a first coupling element for mechanically coupling to a first mating coupling element of the tension spring (107), and the main valve (101) comprises a second coupling element for mechanically coupling to a second mating coupling element of the tension spring (107).

12. Control method for controlling a flow of compressed gas from a pressurized tank (300) by means of a shut-off valve (100),
wherein the shut-off valve (100) comprises:
- a main valve (101),
- a servo valve (103),
- a coil (105),
- a tension spring (107),
wherein the control method comprises the following steps:
- an opening step (201) for opening the shut-off valve (100), in which the coil (105) is energized with electric current to move the servo valve (103) from a first servo valve position to a second servo valve position, so that the servo valve (103) releases a control duct (115) in the main valve (101) between a control chamber (117) of the shut-off valve (100) and a system-proximal chamber (111), and a compressed gas located in the control chamber (117) flows into the system-proximal chamber (111),
wherein the tension spring (107) mechanically couples the servo valve (103) to the main valve (101) and a tensile force is provided at the main valve (101), which moves the main valve (101) from a first main valve position to a second main valve position and a main duct (123) which connects a compressed gas vessel (109) to the system-proximal chamber (111) is released,
- a shutting-off step (203) to shut off the shut-off valve (100), in which the coil (105) is de-energized so that a compression spring (113) moves the servo valve (103) from the second servo valve position to the first servo valve position, and the servo valve (103) closes in a gas-tight manner the control duct (115) in the main valve (101), and the main valve (101) closes in a gas-tight manner the main duct (123).

13. Pressurized tank system (300) having a shut-off valve (100) according to one of Claims 1 to 11.

14. Vehicle (200) having a pressurized tank system (300) according to Claim 13.

## Revendications

1. Vanne d'arrêt (100) pour la commande d'un écoulement de gaz sous pression à partir d'un récipient (109) de gaz sous pression dans un espace (111) côté système, la vanne d'arrêt (100) comprenant :
- une vanne principale (101),
- une vanne pilote (103),
- une bobine (105),
la bobine (105) étant conçue pour déplacer, lors d'une alimentation de la bobine (105) en courant électrique, la vanne pilote (103) à partir d'une première position de vanne pilote dans une deuxième position de vanne pilote, la vanne pilote (103), dans la première position de vanne pilote, fermant de manière étanche au gaz un canal de commande (115) dans la vanne principale (101) entre un espace de commande (117) de la vanne d'arrêt (100) et l'espace (109) côté système et
la vanne pilote (103), dans la deuxième position de vanne pilote, libérant le canal de commande (115) dans la vanne principale (101) et étant introduite dans l'espace de commande (117) par l'intermédiaire de la vanne pilote (103), **caractérisée par** un ressort de traction (107), le ressort de traction (107) accouplant mécaniquement la vanne pilote (103) avec la vanne principale (101) et mettant à disposition une force de traction au niveau de la vanne principale (101) afin de déplacer la vanne principale (101) à partir d'une première position de vanne principale dans une deuxième position de vanne principale lorsque la vanne pilote (103) se déplace dans la deuxième position de vanne pilote,
la vanne principale (101), dans la première position de vanne principale, fermant de manière étanche au gaz un canal principal (123) qui relie le récipient (109) de gaz sous pression à l'espace (111) côté système et la vanne principale (101), dans la deuxième position de vanne principale, libérant le canal principal (123).

2. Vanne d'arrêt (100) selon la revendication 1,
**caractérisée**
**en ce que** l'espace de commande (117) est agencé au-dessus de la vanne pilote (103) et la vanne pilote (103) comprend un canal de commande supplémentaire (119) qui relie l'espace de commande (117) au canal de commande (115) dans la vanne principale (101) de telle sorte que la vanne pilote (103), lors du déplacement dans la deuxième position de la vanne pilote, se déplace dans l'espace de commande (117).

3. Vanne d'arrêt (100) selon la revendication 2,
**caractérisée**
**en ce que** la vanne d'arrêt (100) comprend un espace de logement (121) destiné à recevoir la vanne principale (101) dans la deuxième position de vanne principale, l'espace de logement (121) étant agencé entre la vanne pilote (103) et la vanne principale (101) et reliant fluidiquement le canal de commande supplémentaire (119) au canal de commande (115).

4. Vanne d'arrêt (100) selon l'une des revendications précédentes,
**caractérisée**
**en ce qu'**une zone d'étrangement est présente dans le canal de commande supplémentaire (119).

5. Vanne d'arrêt (100) selon la revendication 3,
**caractérisée**
**en ce qu'**un déplacement de la vanne pilote (103) dans la deuxième position de vanne pilote provoque une libération de l'espace de logement (121) en vue de la réception de la vanne principale (101) dans la deuxième position de vanne principale.

6. Vanne d'arrêt (100) selon l'une des revendications précédentes,
**caractérisée**
**en ce que** la vanne principale (101) présente une limite de course côté boîtier suite à laquelle une course de vanne principale est plus petite qu'une course de vanne pilote et, lorsque la vanne pilote (103) est complètement ouverte et que la vanne principale (101) est complètement ouverte, le siège de la vanne pilote reste ouvert et un équilibrage de pression peut avoir lieu entre le canal de commande (115), l'espace de logement (121), le canal de commande supplémentaire (119) et l'espace de commande (117).

7. Vanne d'arrêt (100) selon l'une des revendications précédentes,
**caractérisée**
**en ce qu'**une séparation pneumatique de l'espace de commande et du récipient de gaz sous pression est assurée par l'intermédiaire de guides sur la vanne pilote ou la vanne principale.

8. Vanne d'arrêt (100) selon la revendication 7,
**caractérisée**
**en ce qu'**une séparation pneumatique de l'espace de commande et du récipient de gaz sous pression dans les zones des guides de la vanne pilote ou de la vanne principale est assurée par un élément d'étanchéité comme par exemple un joint torique, une lèvre d'étanchéité ou une membrane.

9. Vanne d'arrêt (100) selon la revendication 8,
**caractérisée**
**en ce qu'**il existe une liaison pneumatique d'étranglement entre l'espace de commande et le récipient de gaz sous pression.

10. Vanne d'arrêt (100) selon l'une des revendications précédentes,
**caractérisée**
**en ce que** la vanne pilote (100) comprend un ressort de compression (13) qui est conçu pour comprimer la vanne pilote (103) dans la première position de vanne pilote et la vanne principale (101) dans la première position de vanne principale lorsque la bobine (105) est hors tension.

11. Vanne d'arrêt (100) selon l'une des revendications précédentes,
**caractérisée**
**en ce que** la vanne pilote (103) comprend un premier élément d'accouplement pour l'accouplement mécanique avec un premier contre-élément d'accouplement du ressort de traction (107) et la vanne principale (101) comprend un deuxième élément d'accouplement pour l'accouplement mécanique avec un deuxième contre-élément d'accouplement du ressort de traction (107).

12. Procédé de commande pour la commande d'un écoulement de gaz sous pression à partir d'un réservoir sous pression (300) au moyen d'une vanne d'arrêt (100),
la vanne d'arrêt (100) comprenant :
- une vanne principale (101),
- une vanne pilote (103),
- une bobine (105),
- un ressort de traction (107),
le procédé de commande comprenant :
- une étape d'ouverture (201) destinée ouvrir la vanne d'arrêt (100), lors de laquelle la bobine (105) est alimentée en courant électrique afin de déplacer la vanne pilote (103) à partir d'une première position de vanne pilote dans une deuxième position de vanne pilote, de telle sorte que la vanne pilote (103) libère un canal de commande (115) dans la vanne principale (101) entre un espace de commande (117) de la vanne d'arrêt (100) et un espace (111) côté système et un gaz sous pression se trouvant dans l'espace de commande (117) s'écoule dans l'espace (111) côté système,
le ressort de traction (107) accouplant mécaniquement la vanne pilote (103) avec la vanne principale (101) et une force de traction étant mise à disposition au niveau de la vanne principale (101), qui déplace la vanne principale (101) à partir d'une première position de vanne principale dans une deuxième position de vanne principale et libère un canal principal (123), qui relie un récipient (109) de gaz sous pression à l'espace (111) côté système,
- une étape de blocage (203) destinée à bloquer la vanne d'arrêt (100), lors de laquelle la bobine (105) est mise hors tension de telle sorte qu'un ressort de compression (113) déplace la vanne pilote (103) à partir de la deuxième position de vanne pilote dans la première position de vanne pilote et la vanne pilote (103) ferme de manière étanche au gaz le canal de commande (115) dans la vanne principale (101) et la vanne principale (101) ferme de manière étanche au gaz le canal principal (123).

13. Système de réservoir sous pression (300) présentant une vanne d'arrêt (100) selon l'une des revendications 1 à 11.

14. Véhicule (200), présentant un système de réservoir sous pression (300) selon la revendication 13.
